# EUROPEAN PATENT SPECIFICATION

(11) **EP 1 434 427 B1**
(45) Date of publication and mention of the grant of the patent: **19.10.2011**
(21) Application number: 03257602.7
(22) Date of filing: 03.12.2003
(51) Int. Cl.: H04N 5/232

(54) **Digital camera**
Digitale Kamera
Caméra numérique

(30) Priority: 03.12.2002 JP 2002350749
(43) Date of publication of application: 30.06.2004
(73) Proprietor: Ricoh Company, Ltd., Tokyo 143-8555 (JP)
(72) Inventor: Yoshida, Akihiro, c/o Ricoh Company Ltd., Tokyo, 143-8555 (JP)
(74) Representative: Leeming, John Gerard

(56) References cited:
- EP-A- 0 606 018
- EP-A- 0 654 690
- JP-A- 9 090 204
- JP-A- 11 023 955
- JP-A- 2001 141 986
- US-A- 5 694 168

## Description

The present invention relates to a digital camera capable of performing automatic focusing by a CCD-AF system and a range finding sensor system.

Automatic focusing of a digital camera includes a CCD-AF system which finds a peak (focusing position) of contrast by a luminance signal accumulated in a CCD with driving a focus lens toward the direction of an optical axis and a range finding sensor system which obtains distance information from a digital camera to an object (object distance), and measures the object distance based on a triangular surveying system. There has been considered a digital camera capable of processing automatic focusing (AF) processing by both the CCD-AF system and the range finding sensor system.

The CCD-AF system is the system which drives a focus lens so as to change a focus from an infinite distance to the closest distance, and finds the peak by sampling the contrast finely. Consequently, the CCD-AF system has high focusing accuracy, but there has been a problem that the system takes time to detect a focusing position. Especially for a digital camera, a time-lag until a shutter is clicked after a release button is pressed by a user has been a problem, so it has been desired to reduce the time-lag.

On the contrary, the range finding sensor system directly obtains object distance information, and calculates the object distance based on this object distance information, so automatic focusing processing can be conducted with high speed.

However, the range finding sensor system has a problem in which the focusing accuracy is inferior to that of the CCD-AF system. The focusing accuracy is decided in view of optical factors such as a focal length, a F-number, and permissible circle of confusion; however, for example, in a digital camera, the permissible circle of confusion is small, so there are many cases that range finding accuracy of the rage finding sensor is not enough for a digital camera. The focusing accuracy is affected by a zooming position, and the focusing accuracy of a telephoto end is inferior to that of the focusing accuracy of a wide angle end.

JP 11 023955 discloses an automatic focusing camera in which a passive AF device uses range-finding means to measure the object distance, If the measured distance is greater than a previously set distance, a focusing position is based on the measured distance; if not, contrast AF is performed.

The present invention has been made in view of the aforementioned problems, and an object of the invention is to provide a digital camera which improves resolution of a photographed image with reducing a release time-lag by using a range finding sensor system.

According to the present invention there is provided a digital camera as specified in the claims.

The invention will be described below with reference to an exemplar embodiment and the accompanying drawings in which:
FIG. 1 is a view showing a schematic construction of digital camera according to an embodiment of the present invention.
FIG. 2 is a view showing a frame format of processing flow in an image processing section of an image processing IC in FIG. 1
FIG. 3 is a view showing a schematic construction of a circuit for conducting edge enhancement processing.
FIG.4 shows graphs indicating level conversion features in edge enhancement processing; FIG. 4A is used for a HBAF system, and FIG. 4B is used for a range finding sensor system.
FIG. 5 shows graphs indicating filter coefficients of high pass filters for conducting digital filter processing; FIG. 5A is used for a HBAF system, and FIG. 5B is used for a range finding sensor system.
FIG. 6 shows views indicating frame formats of changes in frequency characteristics of luminance signals obtained by edge enhancement processing; FIG. 6A is a frequency characteristic before the edge enhancement processing of the HBAF system, FIG. 6B is a frequency characteristic after the edge enhancement processing of the HBAF system, FIG. 6C is a frequency characteristic before the edge enhancement processing of the range finding sensor system, and FIG. 6D is a frequency characteristic after edge enhancement processing of the range finding sensor system.

Hereinafter, an embodiment of the present invention will be described with reference to the accompanying drawings.

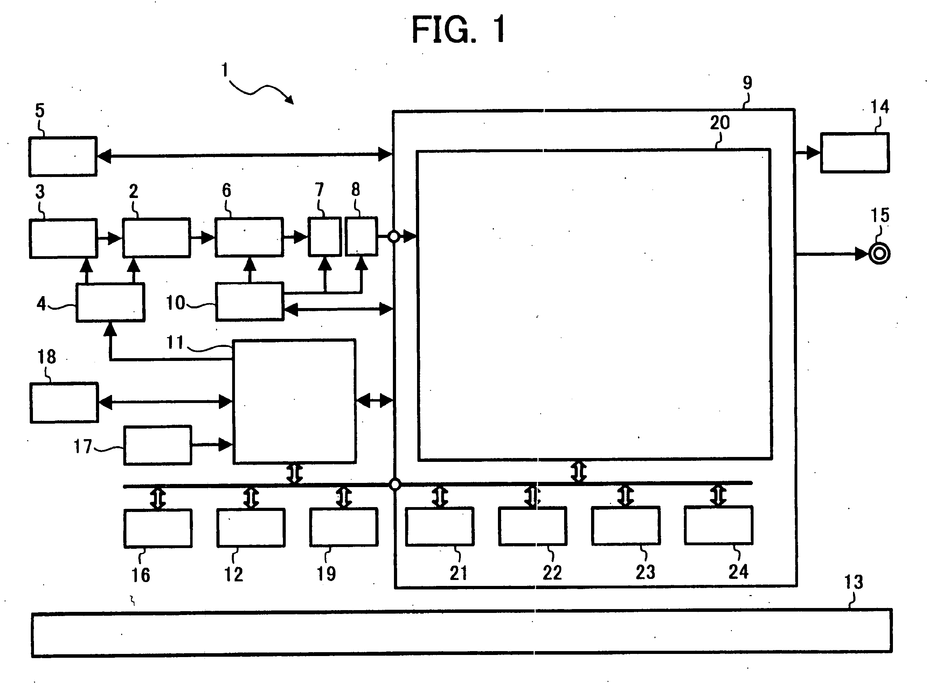

FIG. 1 is a schematic view showing a digital camera according to the embodiment of the present invention. In FIG. 1, reference numeral 1 denotes a digital camera. The digital camera 1 includes a lens unit 2, an aperture stop shutter 3, an optical system driving unit 4, a range finding sensor 5, a CCD (charged-coupled device) 6, a CDS (correlated double sampling) circuit 7, an A/D converter 8, an image processing IC 9 as an aperture processing device and a digital filter processing device, a timing generator 10, a CPU 11, a memory for programming 12, a power source unit 13, a LCD 14, an external monitor connection jack 15, an image data recording unit 16, an operation unit 17, a strobe unit 18, and an image data buffer memory 19.

The lens unit 2 includes a focus lens and the like (not shown). The optical system driving unit 4 drives this lens unit 2, the aperture stop shutter 3 and so on, and sets up an appropriate optical condition when loading an image or monitoring. Moreover the optical system driving unit 4 drives the focus lens when automatic focusing is conducted by the after-mentioned CCD-AF system. In other words, the optical driving unit 4 includes a pulse motor (not shown) and a focus driver (not shown), and the focus driver drives the pulse motor in accordance with the control signal from the CPU11, and moves the focus lens along an optical axis.

The range finding sensor 5 measures the distance to an object by a passive system, for example. The range finding sensor 5 has two lenses (not shown) arranged parallel rightward and leftward and two photo sensor arrays (not shown) arranged parallel rightward and leftward corresponding to these two lenses, respectively. As the explanation of the range finding system using this range finding sensor 5, quantity of light of an object image of each photo sensor array entered through the right and left lenses of the range finding sensor 5 is integrated by the range finding information arithmetic unit (not shown) of the image processing IC 9, and the disagreement of data obtained by the right and left photo sensor arrays is thereby calculated. Consequently, the range finding information arithmetic unit calculates the distance (object distance) to an object, and then outputs the calculated distance to the CPU 11. The range finding may be carried out by an active system with using the range finding sensor 5.

As described above, the case for detecting the focal position by using the range finding sensor 5 is called the range finding sensor system (a second focusing system), and the case for detecting the focal position by using the CCD6 is called the CCD-AF system (a first focusing system). In the CCD-AF system, there is adopted a hill-climbing servo system in which the contrasts of object (AF evaluation value) corresponding to the image signals output from the CCD 6 are sampled with moving the focus lens, and the peak position of the AF evaluation value is considered as an focusing position. When the CCD-AF system and the range finding sensor system are used together, it is called a hybrid AF (HBAF) system. The digital camera 1 according to the embodiment of the present invention is capable of conducting both the automatic focusing processing by the HBAF system and the automatic focusing processing by the range finding sensor system, and it is adopted that a user can select either the automatic focusing processing by the HBAF system or the automatic focusing processing by the range fining sensor system by using the after-described automatic focusing key.

The CCD 6 converts an image input through the lens unit 2 into an electronic signal (analogue image data). The CDS circuit 7 is for reducing noise with respect to the CCD type image pick-up device. The A/D converter 8 converts the analogue image data from the CCD 6 into digital image data. In other words, by the instruction from the CPU 11, the output signal of the CCD 6 is converted into a digital signal by an appropriate sampling frequency (for example, an integral multiple of sub carrier frequency of NTSC signal) thought the CDS circuit 7 and the A/D converter 8. This digital signal is sent to the after-described image processing IC 9.

The timing generator 10 is for generating varied timing pulses to perform exposure time control and driving of the CCD 6.

The CPU 11 controls the various operations of the digital camera 1 in accordance with the instruction from a user which passed the after-mentioned operation unit 17 and so on in accordance with a program stored in the memory 12 for programming. Particularly, the CPU 11 conducts the controls such as a photographing operation, an automatic exposure (AE) operation, an automatic white balance (AWB) adjusting operation, and an AF operation- A camera power source supplies a power to the various parts of the digital camera 1 such as the CPU 11 from the power source unit 13 such as NiCd, nickel hydride battery, or lithium battery.

The LCD 14 displays digital image data obtained by photographing, image data obtained by expansion processing of recording data of the image data recording unit 16 and so on. The digital camera 1 can display the image data on an external monitor (not shown) by connecting the external monitor such as TV to an external monitor connection jack 15.

The image data recording unit 16 is a PC card or the like which is connected detachably to a PC card interface, for example. The image data obtained by photographing an object is stored in the image data recording unit 16.

The operation unit 17 is used by a user to carry out a functional selection, a photographing instruction, and various setups, and is constructed by a button and so on. Particularly, the operation unit 17 includes a release key (not shown) for instructing photography, a zoom key (not shown) for setting up a zooming position (tale to wide), an automatic focusing key (not shown) for setting up the automatic focusing system (the HBAF system or the range finding sensor system) and so on. The CPU 11 carries out the automatic focusing operation when the release key is half pressed, and when the release key is full pressed, the CPU 11 performs the photographing operation.

The strobe unit 18 emits light by the instruction of a user or automatically when photographing.

The image processing IC 9 includes an image processing unit 20, a system control unit 21, an image compression unit 22, a scaling processing unit 23, and a memory control unit 24.

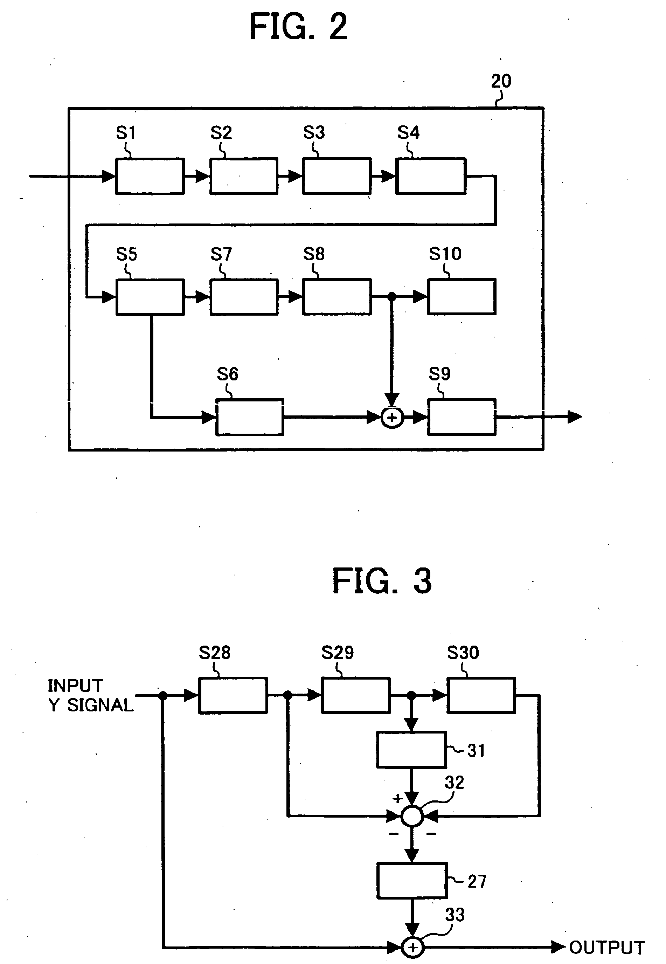

In the image processing unit 20, as shown in FIG. 2, the digital image data are input from the A/D converter 8 (inputting processing (S1)) through the image data buffer memory 19 such as SRAM, and this digital image data are separated into each color component of R, G, and B (R, G, and B separation processing (S2)). Next, the WB evaluation value is obtained, and after each image data of R, G, and B are amplified by a predetermined magnification with digital processing (WB processing (S3)), y conversion of each image data of R, G, and B is conducted (γ processing (S4)), and each image data of R, G, and B is separated into color-difference signals (Cr, Cb) and a luminance signal (Y) (Y. C processing (S5)).

Color signal processing (S6) such as adjusting a color phase or a saturation is conducted for the color-difference signals (Cr, Cb), while the after-mentioned edge enhancement processing (S7) and digital filter processing (S8) are carried out for the luminance signal (Y), and then these are synthesized and are output (output processing (S9)). The integrated value of the luminance signal in which the edge enhancement processing (S7) and the digital filter processing (S8) are conducted is obtained as the AF evaluation value (AF evaluation value obtaining processing (S10)), and is output to the CPU 11.

The system control unit 21 performs controls of the whole image processing, and includes the after-mentioned two kinds of level conversion characteristics used in the edge enhancement processing (S7), and then sends the control signal to the after mentioned aperture control circuit 27 (reference to FIG. 3) based on these level conversion characteristics.

The image compression unit 22 carries out wavelet transform conversion and inverse wavelet transform conversion, which is a process to the image compression and expansion conform to JPEG, and also carries out Huffman coding and decoding which is a process to the process of the image compression and expansion conform to JPEG, for example. The scaling processing unit 23 adjusts, for example, the image size for the display size of LCD 14. For example, image data is recorded in the image data recording unit 16 by the memory control unit 24, and the memory control unit 24 conducts the control when reading the image data from the image data recording unit 16.

FIG. 3 shows a circuit for carrying out the edge enhancement processing (S7). The circuit comprises a HPF (high pass filter) 28, delay circuits 29 and 30, a multiplier 31, a compositor 32, the aperture control circuit 27, and a compositor 33.

First, the luminance signal (Y) is input in the HPF 28, and the high frequency component of the luminance signal is extracted in the HPF 28. The extracted high frequency luminance signal is input in the delay circuit 29 and the compositor 32. The delay output of the delay circuit 29 is input in the delay circuit 30, while the delay output is input in the multiplier 31 which conducts three times calculation to the input signal. The compositor 32 subtracts the original Y signal and the Y signal which is the delay output of the delay circuit 30 from the Y signal through the multiplier 31 from the delay circuit 29. The output from this compositor 32 becomes the edge component of the luminance signal.

Next, the edge component output from the compositor 32 is input in the aperture control circuit 27, and the aperture processing and coring processing are conducted based on the level conversion characteristics which are installed in advance and are included by the system control unit 21.

In other words, in the aperture processing, a gain control signal as a control signal which is supplied from the system control unit 21 is provided, and the edge component of the luminance signal is enhanced by multiplying a predetermined gain (aperture gain) coefficient to the edge component of the luminance signal. In the coring processing, the noise component contained in the edge component is eliminated by eliminating the component within the preinstalled coring range (coring) in the edge component from the compositor 32.

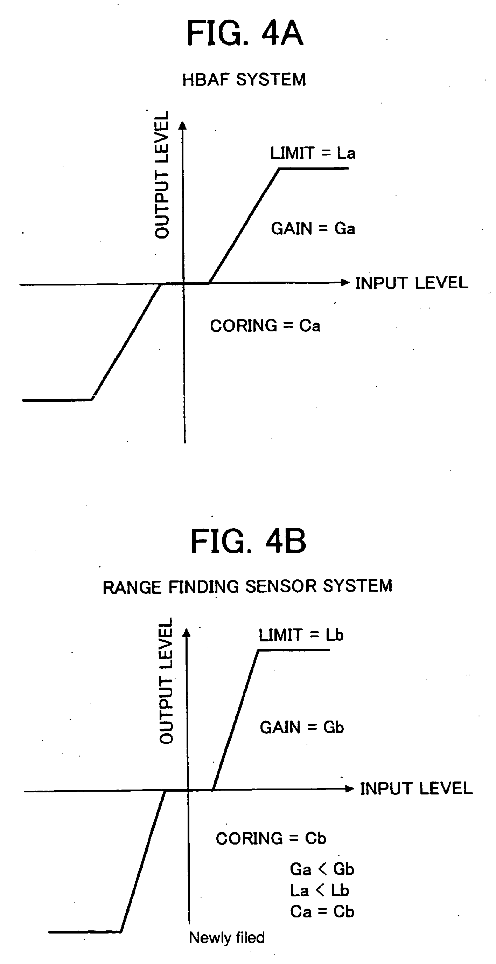

At this point, the applied level conversion characteristic varies depending on which of the HBAF system and the range finding sensor system is selected by the automatic focusing key of the operation unit 17. FIG. 4 shows graphs indicating the level conversion characteristics in which the system control unit 21 includes; FIG. 4A is a graph for standard edge processing used for the HBAF system; FIG. 4B is a graph for enhanced edge processing used for the range finding sensor system. In FIG. 4, a vertical axis shows a level of edge component input in the aperture control circuit 27, and a horizontal axis shows a level of edge component output from the aperture control circuit 27.

As apparent from the comparison between FIG. 4A and FIG. 4B, the aperture gain Gb applied to the range finding sensor system is larger than the aperture gain Ga applied to the HBAF system, and the aperture limit Lb applied to the range finding sensor system is larger than the aperture limit La applied to the HBAF system. On the contrary, the coring Ca applied to the HBAF system and the coring Cb applied to the range finding sensor system are the same.

When the HBAF system is selected by the automatic focusing key, the level conversion characteristic for the standard edge enhancement processing shown in FIG. 4A is applied. When the range finding sensor system is selected, the level conversion characteristic for the enhanced edge enhancement processing shown in FIG. 4B is applied. Particularly, the system control unit 21 receives information which of the automatic focusing system is selected by the automatic focusing key, from the CPU 11, and sends the control signal in accordance with the level conversion characteristic corresponding to the aperture control circuit 27 based on this information.

The aperture control circuit 27 outputs the edge component of luminance signal to the compositor 33 after conducting the aperture processing and the coring processing

In the compositor 33, the edge component of the original picture signal is enhanced by superimposing the edge component from the aperture control circuit 27 to the luminance signal of the original picture signal (synthesizing by the compositor 33).

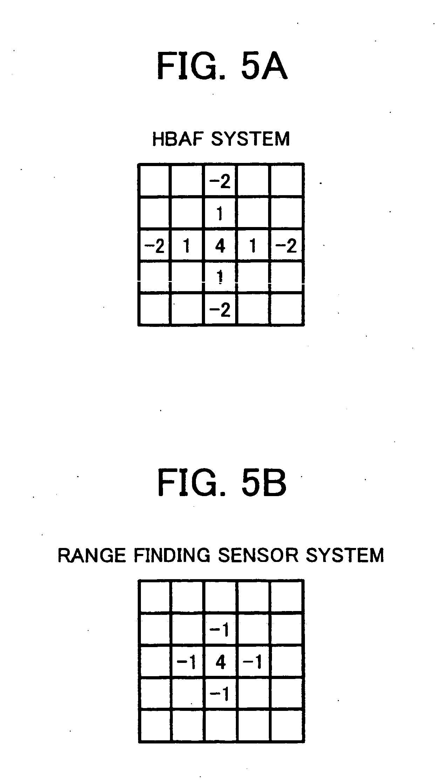

The digital filter processing (S8) is conducted for the luminance signal of the picture signal output from the compositor 33 by the above described high pass filter (HPF) (not shown). This high pass filter includes two kinds of filter coefficients for the enhanced edge processing shown in FIG. 5B and for the standard edge processing shown in FIG. 5A, and applies different filter coefficients based on the information which of automatic focusing system is selected by the automatic focusing key. More specifically, when the HBAF system is selected, the filter coefficients for the standard edge processing shown in FIG. 5A are applied to the high pass filter, and when the range finding sensor system is selected, the filter coefficients for the enhanced edge processing shown in FIG. 5B are applied, and then the digital filter processing (S8) is respectively carried out.

In the digital camera 1 according to the embodiment, the aperture gain Gb applied to the range finding sensor system is adopted to be larger than the aperture gain Ga applied to the HBAF system, so the low resolution by the automatic focusing can be compensated by enhancing the edge component of the picture signal. Therefore, the edge portion is enhanced in an image, and the resolution of apparent photographed image is improved.

The aperture limit Lb applied to the range finding sensor system is adopted to be larger than the aperture limit La applied to the HBAF system. The edge component of the picture signal is thereby enhanced, and the edge portion is enhanced in an image and the resolution of apparent photographed image is improved.

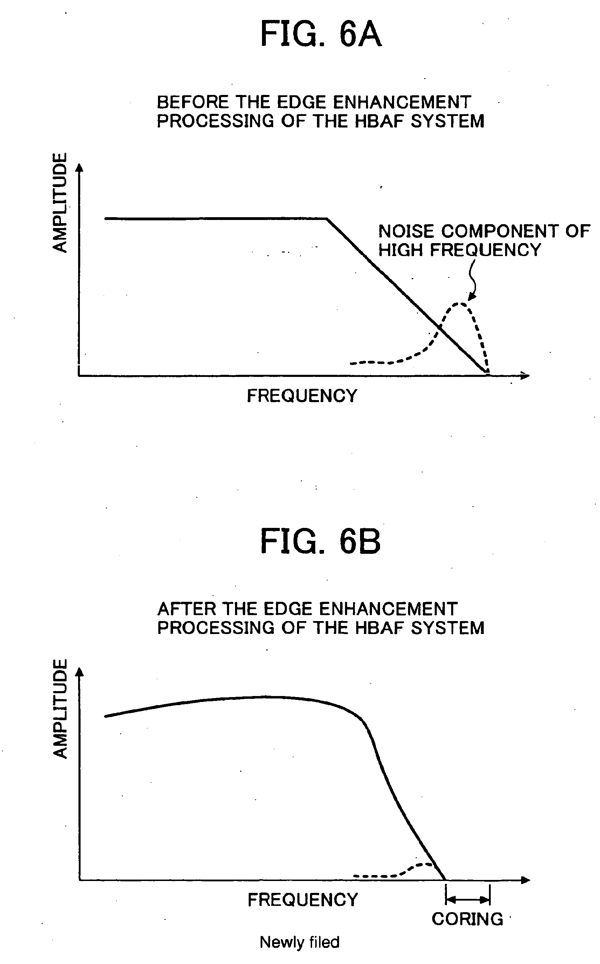

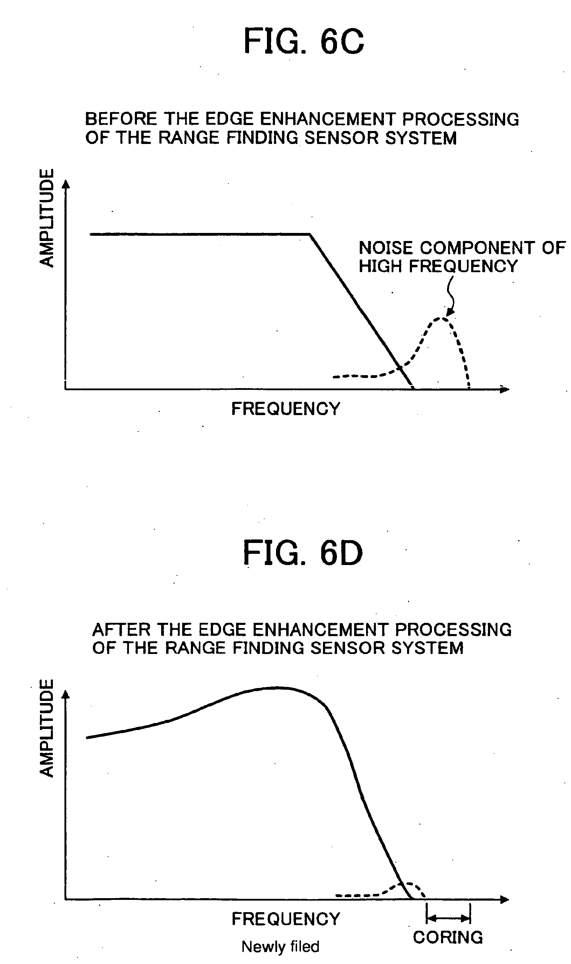

FIG. 6 shows views indicating frame formats of changes in frequency characteristics of luminance signals obtained by the edge enhancement processing (aperture processing and coring processing) )(S7); FIG. 6A shows the frequency characteristic before the edge enhancement processing of the HBAF system; FIG. 6B shows the frequency characteristic after edge enhancement processing of the HBAF system; FIG. 6C shows the frequency characteristic before the edge enhancement processing of the range finding sensor; FIG. 6D shows the frequency characteristic after the edge enhancement processing of the range finding sensor. In FIG. 6, the vertical axis shows the frequency, and the horizontal axis shows the amplitude. The solid line shows the frequency distribution, and dotted line shows the noise component generated in a hard wear such as the CCD 6. The HBAF system has high focusing accuracy, so the frequency characteristic before the edge enhancement processing is distributed up to the high frequency as shown in FIG. 6A. If the edge enhancement processing is applied to the HBAF system, as shown in FIG. 6B, the high frequency area which tends to be dominated by noise is cut by the coring processing, and an ideal frequency distribution can be obtained by the aperture processing. On the other hand, the focusing accuracy of the range finding system is interior to that of the HBAF system, as shown in FIG. 6C, so the frequency characteristic before the edge enhancement processing (S7) is not extended to the high frequency compared to FIG. 6A. Therefore the resolution is decreased. On the other hand, if the edge enhancement processing (S7) is applied to the range finding system, as shown in FIG. 6D, the frequency characteristic of the high frequency area is increased, and the edge portion is enhanced in an image, and the resolution of apparent photographed image is improved.

Consequently, using the range finding sensor system contributes to improving the resolution of photographed image with shortening the release time-lag.

In the filter coefficients applied to the range finding sensor system, the high frequency component is further enhanced than the filter coefficients applied to the HBAF system, so the high frequency component of the picture signal is thereby enhanced, and the edge portion is enhanced in an image, and then the resolution of apparent photographed image is improved. Therefore, by using the range finding sensor system, the resolution of photographed image can be improved with shortening the release time-lag.

In this extent, comparing with the prior art, for example, according to the invention described in Japanese Patent Laid-Open Hei 09-298683, the aperture gain can he changed, but it is different from the present invention in that the aperture gain is respectively set up based on the optical condition such as a zooming position or an aperture stop diameter of camera. Moreover, in the invention described in Japanese Patent Laid-Open Hei 11-298847, the digital filter characteristic and coring are changed by a photographing mode, but in the present invention, the digital filter characteristics and the like are changed by the automatic focusing system, and the coring stays constant.

The present invention is not limited to the above described embodiment. For example, in the embodiment of the present invention, when the range finding sensor system is selected, the aperture gain and the aperture limit are adopted to be larger than when the HBAF system is used, and the filter coefficients arc characterized to further enhance the high frequency component; however, all of these conditions are not always required. It is possible to use only one condition, and it is also possible to combine appropriate conditions.

In the present embodiment, a user can select either the HBAF system or the range finding sensor system by use of the automatic focusing key, but the automatic focusing system can be selected automatically depending on, for example, a photographing condition and the like.

In the present embodiment, either HBAF system or the range finding sensor system is adopted to select; however the automatic focusing system can be selected from either CCD-AF system or the range finding sensor system, for example, and also it can be selected from any one of systems such as the CCD-AF system, the HBAF system, and the range finding sensor system. Moreover, it can be selected from either the CCD-AF system or HBAF system.

In the image processing unit 20, it is adopted to obtain the WB evaluation value after separating into each color component of R, G, and B, but it can be obtained after conducting the γ conversion, for example. Furthermore, the AF evaluation value is adopted to obtain after the digital filter processing (S8), but it can be conducted before the digital filter processing.

The present invention is constructed as described above; therefore, the present invention makes it possible to improve the resolution of photographed image by using the range finding sensor system with shortening the release time-lag.

The present disclosure relates to subject matter contained in previous Japanese Patent Application No. 2002-350749, filed on December 3, 2002.

## Claims

1. A digital camera (1) comprising:
a first focusing system for obtaining a focusing position by sampling a contrast of an object image formed on a light receiving surface (6) whilst moving a focus lens(2) along an optical axis;
a second focusing system (5) for obtaining a focusing position by measuring a distance to an object based on a triangular surveying system; and
an aperture processing device (27) to correct an edge component of an image signal of a photographed image obtained by photographing said object,
**characterized in that**
when said second focusing system (5) is used independently, said aperture processing device (27) enhances said edge component by using a larger aperture parameter than when said first focusing system is used independently or when said first focusing system and said second focusing system (5) are used together.

2. A digital camera (1) as claimed in claim 1,
**characterised in that** the aperture parameter is an aperture gain Gb.

3. A digital camera (1) as claimed in claim 1,
**characterized in that** the aperture parameter is an aperture limit Lb.

4. The digital camera (1) as claimed in claim 1, further comprising
a digital filter processing device to correct a high frequency component of an image signal of a photographed image obtained by photographing said object,
**characterized in that**
when said second focusing system (5) is used independently, said aperture processing device enhances said edge component by using said larger aperture parameter or said digital filter processing device uses a filter coefficient having a characteristic of further enhancing said high frequency component than when said first focusing system is used independently or said first focusing system and said second focusing system (5) are used together.

## Patentansprüche

1. Digitalkamera (1), die umfasst:
ein erstes Fokussierungssystem, um eine Fokussierungsposition durch Abtasten eines Kontrasts eines Objektbildes, das auf einer Lichtempfangsoberfläche (6) erzeugt wird, während eine Fokuslinse (2) längs einer optischen Achse bewegt wird, zu erhalten;
ein zweites Fokussierungssystem (5), um eine Fokussierungsposition durch Messen eines Abstands zu einem Objekt anhand eines Triangulierungsvermessungssystems zu erhalten; und
eine Aperturverarbeitungsvorrichtung (27), um eine Flankenkomponente eines Bildsignals eines photographierten Bildes, das durch Photographieren des Objekts erhalten wird, zu korrigieren,
**dadurch gekennzeichnet, dass**
dann, wenn das zweite Fokussierungssystem (5) unabhängig verwendet wird, die Aperturverarbeitungsvorrichtung (27) die Flankenkomponente unter Verwendung eines Aperturparametersverbessert, der größer ist als jener, der verwendet wird, wenn das erste Fokussierungssystem unabhängig verwendet wird oder wenn das erste Fokussierungssystem und das zweite Fokussierungssystem (5) gemeinsam verwendet werden.

2. Digitalkamera (1) nach Anspruch 1,
**dadurch gekennzeichnet, dass** der Aperturparameter eine Aperturverstärkung (Gb) ist.

3. Digitalkamera (1) nach Anspruch 1,
**dadurch gekennzeichnet, dass** der Aperturparameter eine Aperturgrenze (Lb) ist.

4. Digitalkamera (1) nach Anspruch 1, die ferner umfasst:
eine digitale Filterverarbeitungsvorrichtung, um eine Hochfrequenzkomponente eines Bildsignals eines photographierten Bilds, das durch Photographieren des Objekts erhalten wird, zu korrigieren,
**dadurch gekennzeichnet, dass**
dann, wenn das zweite Fokussierungssystem (5) unabhängig verwendet wird, die Aperturverarbeitungsvorrichtung die Flankenkomponente unter Verwendung des größeren Aperturparameters verbessert oder die digitale Filterverarbeitungsvorrichtung einen Filterkoeffizienten verwendet, der die Eigenschaft besitzt, die Hochfrequenzkomponente stärker zu verbessern als wenn das erste Fokussierungssystem unabhängig verwendet wird oder wenn das erste Fokussierungssystem und das zweite Fokussierungssystem (5) gemeinsam verwendet werden.

## Revendications

1. Appareil photographique numérique (1) comprenant :
un premier système de mise au point pour obtenir une position de mise au point en échantillonnant un contraste d'une image d'objet formée sur une surface de réception de lumière (6) tout en déplaçant une lentille de mise au point (2) le long d'un axe optique ;
un deuxième système de mise au point (5) pour obtenir une position de mise au point en mesurant une distance jusqu'à un objet sur la base d'un système de triangularisation ; et
un dispositif de traitement d'ouverture (27) pour corriger une composante de bord d'un signal d'image d'une image photographiée obtenue en photographiant ledit objet,
**caractérisé en ce que**
lorsque ledit deuxième système de mise au point (5) est utilisé de manière indépendante, ledit dispositif de traitement d'ouverture (27) améliore ladite composante de bord en utilisant un plus grand paramètre d'ouverture que lorsque ledit premier système de mise au point est utilisé de manière indépendante ou lorsque ledit premier système de mise au point et ledit deuxième système de mise au point (5) sont utilisés ensemble.

2. Appareil photographique numérique (1) selon la revendication 1,
**caractérisé en ce que** le paramètre d'ouverture est un gain d'ouverture Gb.

3. Appareil photographique numérique (1) selon la revendication 1,
**caractérisé en ce que** le paramètre d'ouverture est une limite d'ouverture Lb.

4. Appareil photographique numérique (1) selon la revendication 1, comprenant en outré :
un dispositif de traitement de filtre numérique pour corriger une composante haute fréquence d'un signal d'image d'une image photographiée obtenue en photographiant ledit objet,
**caractérisé en ce que**
lorsque ledit deuxième système de mise au point (5) est utilisé de manière indépendante, ledit dispositif de traitement d'ouverture améliore ladite composante de bord en utilisant ledit plus grand paramètre d'ouverture ou ledit dispositif de traitement de filtre numérique utilise un coefficient de filtre ayant pour caractéristique d'améliorer davantage ladite composante haute fréquence que lorsque ledit premier système de mise au point est utilisé de manière indépendante ou lorsque ledit premier système de mise au point et ledit deuxième système de mise au point (5) sont utilisés ensemble.
